# EUROPEAN PATENT APPLICATION

(11) **EP 4 600 657 A2**
(43) Date of publication of application: **13.08.2025**
(21) Application number: 25184344.7
(22) Date of filing: 31.12.2019
(51) Int. Cl.: G01N 35/00

(54) **SAMPLE ANALYSIS SYSTEM AND AUTOMATIC PRECISION MANAGEMENT METHOD THEREFOR**

(62) Divisional of application: 19958734.6
(71) Applicant: Shenzhen Mindray Bio-Medical Electronics Co., Ltd., Shenzhen, Guangdong 518057 (CN)
(72) Inventor: JIANG, Bin, Shenzhen, 518057 (CN); ZENG, Fanshun, Shenzhen, 518057 (CN); LI, Xuerong, Shenzhen, 518057 (CN); YAN, Changyin, Shenzhen, 518057 (CN)
(74) Representative: KIPA AB

(57) **Abstract**

A sample analysis system and an automated precision management method therefor. The sample analysis system includes a hematology analyzer, a controller, a smear preparation apparatus comprising a smearing machine and a staining machine, and a cell image analysis apparatus.

## Description

### TECHNICAL FIELD

The disclosure relates to the field of medical devices, and in particular, to a sample analysis system and an automated precision management method therefor.

### BACKGROUND

A hematology analyzer, a smear preparation apparatus (also referred to as a smearing and staining machine), a cell image analysis apparatus, and the like are often used in blood analysis. Regular quality control is required to ensure proper function and performance of instruments such as the smearing and staining machine and the cell image analysis apparatus. In the prior art, quality control for the smearing and staining machine and the cell image analysis apparatus is performed manually, which involves complex and cumbersome operations and consumes a lot of time and labor, resulting in low efficiency.

### SUMMARY

The disclosure mainly provides a sample analysis system and an automated precision management method therefor.

According to a first aspect, a precision management method for a sample analysis system is provided in an embodiment, and includes the following steps:
testing samples to be analyzed by a hematology analyzer;
when a preset condition for triggering quality control is satisfied, selecting, by a controller, a quality control sample from the samples to be analyzed that have been tested, based on sample test results obtained by the hematology analyzer, wherein the result of the quality control sample tested by the hematology analyzer is a first test result;
controlling, by the controller, a dispatching apparatus to transfer the quality control sample to a smearing machine;
preparing a quality control blood smear from the quality control sample by the smearing machine;
staining the quality control blood smear by a staining machine;
controlling, by the controller, the dispatching apparatus to transfer the quality control blood smear to a cell image analysis apparatus;
imaging and analyzing the quality control blood smear by the cell image analysis apparatus, to obtain a second test result;
comparing the first test result with the second test result of the quality control sample; and
outputting a result of the comparison.

In the method, the preset condition for triggering quality control includes at least one of: completion of testing of N^{th} sample after the hematology analyzer initially starts testing in each cycle, a preset time, a preset load, and a preset test result, wherein N is a natural number not less than 1.

In the method, comparing the first test result with the second test result of the quality control sample includes:
comparing a first test result value of a preset type of cells in the quality control sample in the first test result with a second test result value of the preset type of cells in the second test result; and
outputting prompt information if a deviation between the first test result value and the second test result value of the preset type of cells in the quality control sample is outside a preset range.

Before testing samples to be analyzed by a hematology analyzer, the method further includes: performing quality control on the hematology analyzer; and if the hematology analyzer passes the quality control, testing the samples to obtain the first test results of the samples.

The method further includes: if the deviation between the first test result value and the second test result value of the preset type of cells in the quality control sample is outside the preset range, outputting prompt information indicating that the cell image analysis apparatus fails to pass quality control.

In the method, the first test result of the quality control sample includes abnormality information, and comparing the first test result with the second result of the quality control sample includes:
checking whether the abnormality information in the first test result of the quality control sample and abnormality information in the second test result of the quality control sample are consistent; and
outputting prompt information if the abnormality information in the first test result of the quality control sample and the abnormality information in the second test result of the quality control sample are inconsistent.

In the method, the abnormality information includes at least one of malaria parasites, platelet aggregation, red blood cell aggregation, hematocrit exceeding a preset threshold, uneven size of red blood cells, and abnormal white blood cells.

The method further includes: determining quality of smearing and/or staining of the quality control blood smear based on test information related to smearing and/or staining of the quality control blood smear in the second test result.

In the method, the test information related to smearing in the second test result includes at least one of blood film morphology and cell distribution of the quality control blood smear that are obtained by the cell image analysis apparatus.

In the method, the test information related to staining in the second test result includes at least one of blood film color and color shade of the quality control blood smear that are obtained by the cell image analysis apparatus.

In the method, comparing the first test result with the second test result of the quality control sample includes:
comparing the first test result with the second test result of the quality control sample after the smearing quality and the staining quality are determined to be satisfactory.

In the method, selecting a quality control sample based on the sample test results obtained by the hematology analyzer includes: selecting a sample, which has a first test result containing a test value of a preset type of cells that falls within a preset range, as the quality control sample.

In the method, the test value of the preset type of cells in the first test result that falls within a preset range includes at least one of: a white blood cell count that falls within a preset first range, a red blood cell count that falls within a preset second range, and a mean corpuscular volume that falls within a preset third range.

In the method, selecting a quality control sample based on the sample test results obtained by the hematology analyzer includes: selecting a sample having a first test result containing abnormality information as the quality control sample, wherein preferably the abnormality information includes at least one of malaria parasites, platelet aggregation, red blood cell aggregation, hematocrit exceeding a preset threshold, uneven size of red blood cells, and abnormal white blood cells.

The method further includes:
if a deviation between corresponding results in the first test result and in the second test result of the quality control sample is outside a preset range, controlling the dispatching apparatus to transfer the sample to be analyzed to another hematology analyzer for retesting, to obtain a first retest result using said hematology analyzer; and comparing the first retest result with the second test result; or
if a deviation between corresponding results in the first test result and in the second test result of the quality control sample is outside a preset range, controlling the dispatching apparatus to transfer the sample to be analyzed to another cell image analysis apparatus for retesting, to obtain a second retest result using said cell image analysis apparatus; and comparing the first test result with the second retest result; or
if a deviation between corresponding results in the first test result and in the second test result of the quality control sample is outside a preset range, controlling the dispatching apparatus to transfer the sample to be analyzed to the hematology analyzer and the cell image analysis apparatus for retesting, to obtain a first retest result using the hematology analyzer and a second retest result using the cell image analysis apparatus; and comparing the first retest result with the second retest result.

The method further includes: if a deviation between corresponding results in the first test result and in the second test result of the quality control sample is outside a preset range, reselecting a quality control sample from the samples to be analyzed that have been tested.

The method further includes:
printing a quality control marker on the quality control sample, and the cell image analysis apparatus switches to a quality control mode to image and analyze the quality control sample when identifying the quality control marker.

According to a second aspect, a sample analysis system is provided in an embodiment and includes:
a hematology analyzer configured to test at least one sample;
a controller configured to obtain a first test result of the at least one sample based on analysis of the hematology analyzer, determine in real time whether a preset condition for triggering quality control is satisfied, and if the preset condition for triggering quality control is satisfied, select a sample that has been analyzed by the hematology analyzer as a quality control sample; and the controller is further configured to control a dispatching apparatus to transfer the quality control sample to a smear preparation apparatus;
the smear preparation apparatus configured to prepare a blood smear from the quality control sample; and
a cell image analysis apparatus configured to image and analyze the blood smear and obtain a second test result based on the imaging and analysis;
wherein the controller is further configured to:
   compare corresponding information in the second test result with that in the first test result; and
   control a display apparatus to output a result of the comparison.

In the sample analysis system, the smear preparation apparatus includes:
a smearing machine configured to smear the quality control sample based on a preset smearing parameter, wherein the smearing process includes dispensing the quality control sample to a slide and spreading the sample on the slide into a blood film;
a staining machine configured to stain the blood film on the slide based on a preset staining parameter; and
a printing apparatus configured to print sample information on the blood smear of the quality control sample, wherein the sample information includes a quality control marker.

In the sample analysis system, the cell image analysis apparatus includes an identification apparatus configured to identify the quality control marker on the blood smear of the quality control sample.

In the sample analysis system, the second test result includes test information based on cell imaging and analysis, and test information related to quality of smearing and/or staining of the cell image analysis apparatus.

In the sample analysis system, the controller is further configured to determine quality of smearing and/or staining of the smear preparation apparatus based on the test information related to quality of smearing and/or staining of the cell image analysis apparatus in the second test result.

In the sample analysis system, the hematology analyzer is further configured to tests the sample to obtain the first test result of the sample, only after being subjected to and passing quality control.

In the sample analysis system, the controller is further configured to: if a deviation between the second test result and the first test result of the quality control sample is outside a preset range, control the display apparatus to output quality control prompt information of the cell image analysis apparatus.

According to a third aspect, an automated precision management method for a sample analysis system is provided in an embodiment and includes the following steps:
testing a sample by a hematology analyzer to obtain a first test result of the sample;
an automated quality control start step: upon completion of testing of N^{th} sample after the hematology analyzer initially starts testing in each cycle, or at a preset time after initially starting testing, controlling a dispatching apparatus to transfer the sample that has been tested by the hematology analyzer to a smearing machine;
preparing a quality control blood smear from the sample by the smearing machine, wherein the quality control blood smear is provided with a quality control marker;
staining the quality control blood smear by a staining machine;
controlling, by the controller, the dispatching apparatus to transfer the quality control blood smear to a cell image analysis apparatus;
identifying the quality control marker, switching to a quality control mode, and imaging and analyzing the quality control blood smear in the quality control mode to obtain a second test result, by the cell image analysis apparatus;
comparing the first test result with the second test result of the quality control sample; and
outputting a result of the comparison.

The method further includes:
providing an automated quality control option on a display interface for selection by a user, and after an instruction for selecting the automated quality control option is received, performing the automated quality control start step.

According to a fourth aspect, a sample analysis system is provided in an embodiment and includes:
a smear preparation apparatus including a smearing machine and a staining machine, wherein the smearing machine is configured to smear a quality control sample based on a preset smearing parameter, so as to smear a blood sample of the quality control sample, which is dispensed onto a slide, into a blood film, and the staining machine is configured to stain the blood film on the slide based on a preset staining parameter; and
a cell image analysis apparatus configured to image and analyze the blood smear and obtain a second test result based on the imaging and analysis, wherein the second test result includes test information related to smearing and staining of the quality control blood smear; and
a controller configured to determine quality of smearing and staining of the quality control blood smear based on the second test result.

The system further includes:
a hematology analyzer configured to test at least one sample, and
wherein the controller is further configured to obtain a first test result of the at least one sample based on analysis of the hematology analyzer, determine in real time whether a preset condition is satisfied, and if the preset condition is satisfied, select a sample that has been analyzed by the hematology analyzer as the quality control sample; and the controller is further configured to control a dispatching apparatus to transfer the quality control sample to the smear preparation apparatus.

In the system, the smear preparation apparatus includes a printing apparatus configured to print sample information on the blood smear of the quality control sample, wherein the sample information includes a quality control marker.

In the system, the controller is configured to: identify blood film morphology and/or cell distribution of the quality control blood smear based on the test information related to smearing in the second test result; and determine smearing quality of the smearing machine based on the blood film morphology and/or cell distribution of the quality control blood smear;
wherein the test information related to smearing in the second test result includes at least one of blood film morphology and cell distribution of the quality control blood smear that are obtained by the cell image analysis apparatus.

In the system, the controller is further configured to: identify at least one of blood film color and color shade of the quality control blood smear based on test information related to staining in the second test result; and determine staining quality of the smear preparation apparatus based on at least one of the blood film color and the color shade of the quality control blood smear, wherein the test information related to staining in the second test result includes at least one of blood film color and color shade of the quality control blood smear that are obtained by the cell image analysis apparatus.

In the system, the controller is further configured to: compare corresponding result information in the first test result of the quality control sample with that in the second test result of the quality control sample; and control a display apparatus to output a result of the comparison.

According to a fifth aspect, a sample analysis system is provided in an embodiment and includes:
a memory configured to store a program; and
a processor configured to execute the program stored in the memory to implement the foregoing method.

According to a sixth aspect, a computer-readable storage medium is provided in an embodiment and includes a program, wherein the program is capable of being executed by a processor to implement the foregoing methods.

According to the sample analysis system and the precision management method therefor in the foregoing embodiments, after the sample analysis system starts sample testing, a quality control sample may be automatically selected, the quality control sample is prepared into a quality control blood smear, and then a cell image analysis apparatus images and analyzes the quality control blood smear to obtain a test result based on the imaging and analysis. The test result of the cell image analysis apparatus is compared with a test result of a hematology analyzer, and a comparison result is output, thereby automatically completing precision management for instruments such as the cell image analysis apparatus or the hematology analyzer.

### BRIEF DESCRIPTION OF THE DRAWINGS

FIG. 1 is a schematic structural diagram of a sample analysis system according to an embodiment of the disclosure;
FIG. 2 is a structural block diagram of a smear preparation apparatus in a sample analysis system according to an embodiment of the disclosure;
FIG. 3 is a schematic diagram of a blood smear in a sample analysis system according to an embodiment of the disclosure;
FIG. 4 is a structural block diagram of a cell image analysis apparatus in a sample analysis system according to an embodiment of the disclosure;
FIG. 5 is a schematic structural diagram of a cell image analysis apparatus in a sample analysis system according to an embodiment of the disclosure;
FIG. 6 is a flowchart of a precision management method for a sample analysis system according to an embodiment of the disclosure;
FIG. 7 is a flowchart of an embodiment of step 1 in FIG. 6;
FIG. 8 is a structural block diagram of a sample analysis system according to an embodiment of the disclosure;
FIG. 9 is a flowchart of a precision management method for a sample analysis system according to an embodiment of the disclosure;
FIG. 10 is a flowchart of step S5 in FIG. 9;
FIG. 11 is a flowchart of step S6 in FIG. 9;
FIG. 12 is a flowchart of a precision management method for a sample analysis system according to an embodiment of the disclosure;
FIG. 13 is a flowchart of a precision management method for a sample analysis system according to an embodiment of the disclosure; and
FIG. 14 is a flowchart of quality control for a smear preparation apparatus in a sample analysis system according to an embodiment of the disclosure.

### DESCRIPTION OF THE PREFERRED EMBODIMENTS

The disclosure is further described in detail below by using specific embodiments with reference to the accompanying drawings. Herein, similar elements in different embodiments are identified by similar reference numerals that are associated. In the following embodiments, many details are described to facilitate better understanding of the disclosure. However, those skilled in the art may readily understand that some features may be omitted in a different case, or may be replaced by another element, material, or method. In some cases, some operations related to the disclosure are not shown or described in this specification, this is intended to prevent excessive descriptions from dominating the core part of the disclosure, and for those skilled in the art, it is inessential to describe these related operations in detail, and they can fully understand the related operations based on the descriptions in this specification and general technical knowledge in the art.

In addition, features, operations, or characteristics described in this specification may be combined into various embodiments in any proper manner. In addition, a sequence of steps or actions in method descriptions may also be changed or adjusted in a manner obvious to those skilled in the art. Therefore, various sequences in this specification and accompanying drawings only aim to clearly describe a specific embodiment and do not indicate mandatory sequences unless it is specified that a specific sequence is mandatory.

Serial numbers of components such as "first", "second", and the like herein are only used to distinguish the described objects, and do not have any sequential or technical meaning. Unless otherwise specified, "connection" or "coupling" mentioned in the disclosure includes both direct connection and indirect connection (coupling).

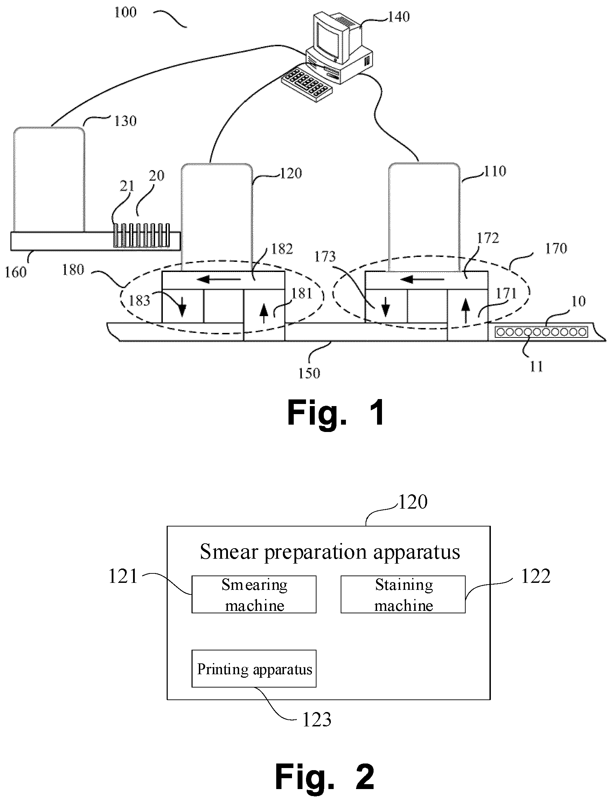

FIG. 1 is a schematic structural diagram of a sample analysis system 100 according to an embodiment of the disclosure. The sample analysis system 100 may be a blood analysis pipeline system, which includes at least one hematology analyzer 110, at least one smear preparation apparatus 120, at least one cell image analysis apparatus 130, and a control apparatus 140.

The hematology analyzer 110 is configured to perform blood routine examination on a sample to be analyzed, the smear preparation apparatus 120 is configured to prepare a smear of the sample to be analyzed, the cell image analysis apparatus 130 is configured to image and analyze cells in the smear, and the control apparatus 140 is communicatively connected to the hematology analyzer 110, the smear preparation apparatus 120, and the cell image analysis apparatus 130.

The sample analysis system 100 further includes a first transfer track 150 and a second transfer track 160. The first transfer track 150 is configured to transfer a test tube rack 10 capable of holding a plurality of tubes 11 containing samples to be analyzed from the hematology analyzer 110 to the smear preparation apparatus 120. The second transfer track 150 is configured to transfer a slide basket 20 capable of holding a plurality of prepared smears 21 from the smear preparation apparatus 120 to the cell image analysis apparatus 130.

The control apparatus 140 is electrically connected to the first transfer track 150 and the second transfer track 160 and controls actions thereof.

The sample analysis system 100 further includes feeding mechanisms 170 and 180 that respectively corresponds to the hematology analyzer 110 and the smear preparation apparatus 120. The feeding mechanisms 170 and 180 respectively include loading buffer regions 171 and 181, feeding test regions 172 and 183, and unloading buffer regions 173 and 183.

When a sample to be analyzed on the test tube rack 20 needs to be transferred to the hematology analyzer 110 for testing, the test tube rack 20 is first transferred from the first transfer track 150 to the loading buffer region 171, and is then transferred from the loading buffer region 171 to the feeding test region 172 for testing by the hematology analyzer 110. After the test is completed, the test tube rack is unloaded from the feeding test region 172 to the unloading buffer region 173, and finally enters the first transfer track 150 from the unloading buffer region 173.

Likewise, when a sample to be analyzed on the test tube rack 20 needs to be examined via microscopy, the test tube rack 20 needs to be transferred to the smear preparation apparatus 120 for smear preparation. The test tube rack 20 is first transferred from the first transfer track 150 to the loading buffer region 181, and is then transferred from the loading buffer region 181 to the feeding test region 182, so that the smear preparation apparatus 120 prepares a smear. After smear preparation is completed, the test tube rack is unloaded from the feeding test region 182 to the unloading buffer region 183, and finally enters the first transfer track 150 from the unloading buffer region 183. The smear preparation apparatus 120 places the prepared smear in the slide basket 20, and transfers the slide basket 20 containing the smear to be analyzed to the cell image analysis apparatus 130 via the second transfer track 160, and the cell image analysis apparatus 130 images and analyzes cells in the sample on the smear to be analyzed.

The sample analysis system 100 also includes a display apparatus (not shown) configured to display a sample test result and an input apparatus configured to provide input. The display apparatus may be a liquid crystal screen, a touchscreen, an LED screen, or the like. The control apparatus 140 may output processed data as image display data such as analysis data and instrument operating parameters to the display apparatus for display. The input apparatus may be a mouse, a keyboard, various keys, a trackball, or the like, to facilitate input operations of a user. The display apparatus may be disposed on the hematology analyzer 110, the cell image analysis apparatus 130, the control apparatus 140, or elsewhere.

The smear preparation apparatus 120 may be configured for smear preparation for blood, body fluid, and the like. As shown in FIG. 2, the smear preparation apparatus 120 includes a smearing machine 121, a staining machine 122, and a printing apparatus 123.

The smearing machine 121 is configured to smear a sample based on a preset smearing parameter. A smearing process includes dispensing the sample to a slide and spreading the sample on the slide into a blood film. The smearing machine 121 includes a sampling mechanism for drawing a sample, a slide loading mechanism for moving a slide to a working line, a sample adding mechanism for adding the sample onto the slide, a smearing mechanism for smearing the sample on the slide, and a drying mechanism for drying a blood film on the slide.

When drawing the sample, the sampling mechanism first mixes the sample, and then aspirates the sample by using a sampling apparatus (such as a sampling needle) in the sampling mechanism. For different the sample containers, sample aspiration may be puncture aspiration (a sample container has a lid, and the sampling apparatus passes through the lid of the sample container) or may be open aspiration (a sample container is open, and the sampling apparatus directly aspirates the sample from an opening). When necessary, blood sample information may be detected to obtain information and compare the information. In some embodiments, a micro sample feeding mechanism is also included. The micro sample feeding mechanism may directly move a test tube placed by an operator toward the sampling apparatus, or the sampling apparatus may move toward a test tube placed by an operator. In another implementation, the micro sample feeding mechanism may alternatively move a test tube toward the sample adding mechanism directly, or the sample adding mechanism may move toward a test tube placed by an operator and directly adds the sample after the sample adding mechanism (such as a blood-dropping needle) aspirates the blood sample, without drawing blood via the sampling mechanism, thereby reducing the need of blood sample and further realizing micro sample feeding and priority sample feeding. When the sampling is completed, the sample adding mechanism prepares to drop the blood onto the slide.

Correspondingly, the slide loading mechanism extracts a slide and loads the slide into a corresponding position to facilitate blood dropping operation. In some embodiments, after the slide has been extracted, operations such as detection of left and right sides of the slide and cleaning of the slide may be further performed, and then the slide is loaded. The loaded slide may be printed with related information, and operations such as detection of front and back of the slide may also be performed.

A blood-dropping needle of the sample adding mechanism drops the sample onto the slide and then smearing operation is performed. The smearing mechanism smears the blood on the slide into a shape of a blood film. Generally, after the smearing operation is completed, the blood film on the slide may be dried to maintain morphology of the blood film. The slide is shown in FIG. 2. In some embodiments, the slide may be driven to turn over before drying the blood film, so as to satisfy a corresponding need. In some embodiments, the dried blood smear may further be subjected to drying examination to determine a drying effect of the blood film. In some embodiments, the dried blood smear may further be subjected to blood film spreading examination to determine whether the blood film is spread and whether a spreading state is satisfactory.

The staining machine 122 is configured to stain the slide, and specifically, stain the blood film on the slide based on a preset staining parameter.

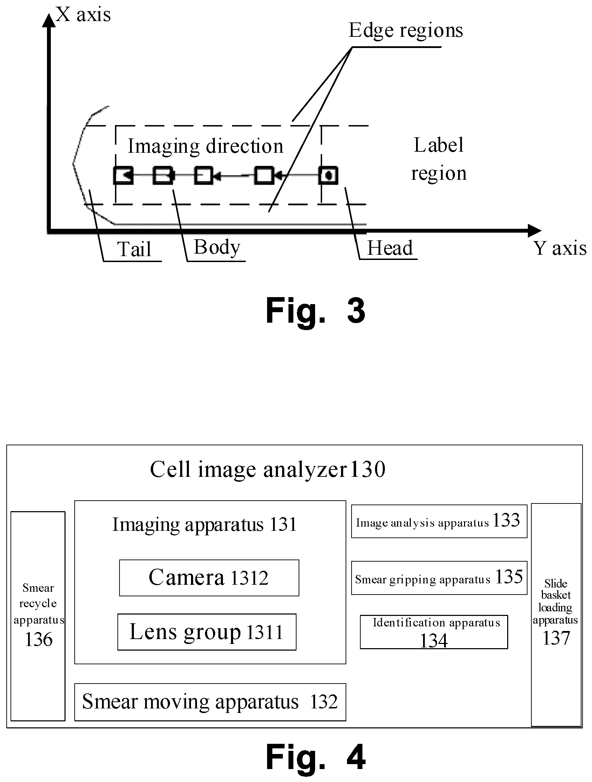

The printing apparatus 123 is configured to print sample information on the blood smear of the sample. As shown in FIG. 3, a label region is provided on the blood smear, and the sample information is printed on the label region of the blood smear. The sample information printed on the label region may include information such as a sample number, a barcode, and a quality control marker.

As shown in FIG. 4, the cell image analysis apparatus 130, such as a cell image analyzer, at least includes an imaging apparatus 131, a smear moving apparatus 132, and an image analysis apparatus 133. The imaging apparatus 131 includes a camera 1312 and a lens group 1311, and is configured to image cells in the sample smeared on the smear. The smear moving apparatus 132 is configured to move the smear relative to the imaging apparatus 131, so that the imaging apparatus 131 captures cell images in a specific region of the smear. The image analysis apparatus 133 is configured to analyze the cell images of the smear.

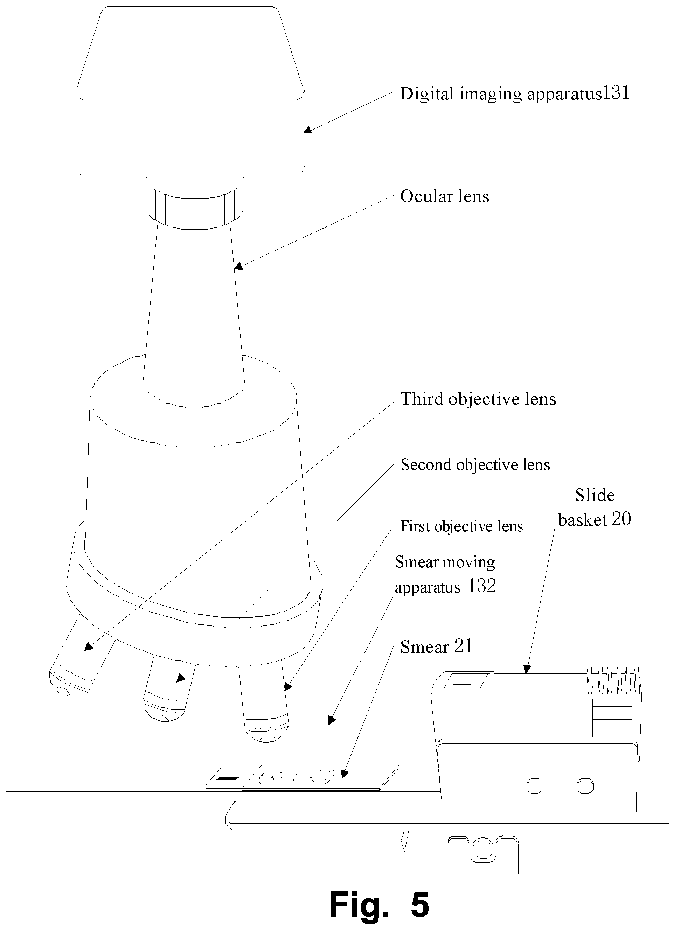

As shown in FIG. 5, the lens group 1311 may include a first objective lens, a second objective lens, and an ocular lens. The first objective lens may be, for example, a 10x objective lens, and the second objective lens may be, for example, a 100x objective lens. The lens group 1311 may further include a third objective lens, which may be, for example, a 40x objective lens.

The cell image analysis apparatus 130 further includes an identification apparatus 134, a slide gripping apparatus 135, and a smear recycle apparatus 136. The identification apparatus 134 is configured to identify identity information of the smear. The slide gripping apparatus 135 is configured to grip the smear from the identification apparatus 134 to the smear moving apparatus 132 for testing. The smear recycle apparatus 136 is configured to hold a smear that has been subjected to testing.

The cell image analysis apparatus 130 further includes a slide basket loading apparatus 137 configured to load a slide basket containing smears to be analyzed. The slide gripping apparatus 135 is further configured to grip a smear to be analyzed in the slide basket loaded on the slide basket loading apparatus 137 to the identification apparatus 134 for identification of identity information. The slide basket loading apparatus 137 is connected to the first transfer track 160, so that the smear prepared by the smear preparation apparatus 120 can be transferred to the cell image analysis apparatus 130.

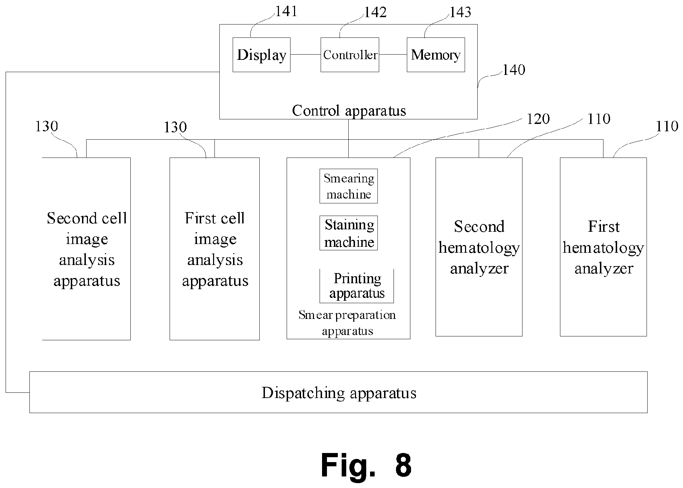

The blood analysis pipeline system provided in the disclosure includes one, two or more hematology analyzers 110, and one, two or more cell image analysis apparatuses 130. In an embodiment, as shown in FIG. 8, an example in which the blood analysis pipeline system includes two hematology analyzers 110 and two cell image analysis apparatuses 130 is used for description. FIG. 8 is only used as an example, and does not limit the number of instruments and apparatuses. In the blood analysis pipeline system shown in FIG. 8, the hematology analyzers 110, the cell image analysis apparatuses 130, and the smear preparation apparatus have been described above, and therefore are not further described herein.

The dispatching apparatus is configured to dispatch the sample and the blood smear, and includes the foregoing first transfer track 150, second transfer track 160, feeding mechanism 170, and feeding mechanism 180.

The foregoing display apparatus includes a display, and the display is disposed on the control apparatus 140. The control apparatus 140 further includes a controller 142 and a memory 143. The memory 143 is configured to store various data, such as computer programs, test results of the hematology analyzer, test results of the cell image analysis apparatus, and data generated by the smear preparation apparatus. The controller 142 includes a processor, which may be configured to execute a program to perform precision management on the blood analysis pipeline system. The precision management may include, for example, determination of accuracy and quality of a result provided by an instrument, and may be also referred to as quality control.

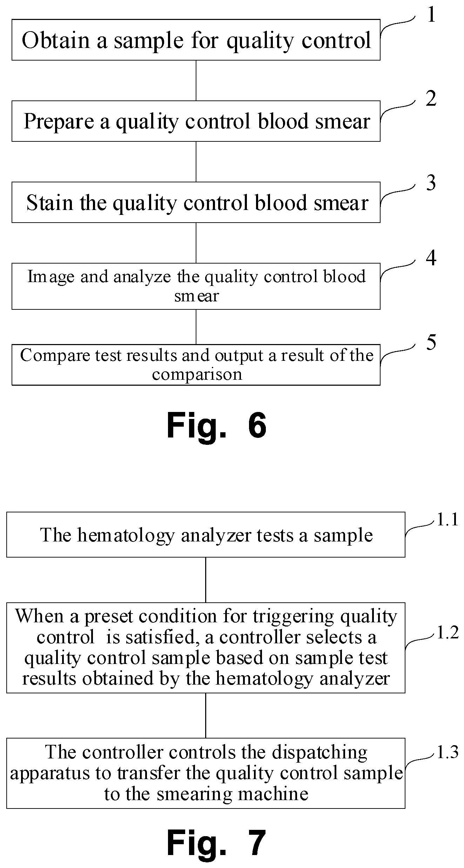

As shown in FIG. 6, in an embodiment, an automated precision management method in which the sample analysis system 100 is a blood analysis pipeline system includes the following steps:
Step 1: A sample for quality control is obtained. There is a plurality of methods of obtaining the sample for quality control, one of which is shown in FIG. 7, including the following steps:
Step 1.1: A user places samples to be analyzed, and the hematology analyzer 110 tests the samples to be analyzed to obtain first test results of the samples to be analyzed. In this embodiment, the samples are blood samples, for example, fresh blood of patients.
Step 1.2: When a preset condition for triggering quality control is satisfied, a controller selects a quality control sample from the samples to be analyzed that have been tested, based on the sample test results obtained by the hematology analyzer 110. The controller may be the controller 142 of the control apparatus 140 or a controller of another instrument in the sample analysis system, for example, a controller of the hematology analyzer 110, a controller of the smear preparation apparatus 120, or a controller of the cell image analysis apparatus 130. In this embodiment, the controller 142 of the control apparatus 140 is used as an example. One or more quality control samples may be selected. The number of quality control samples may be set depending on a user need. Different quality control samples may be used for quality control on different functions, or may be used for quality control on a same function for a number of times, to improve accuracy of quality control result. For example, the controller obtains the first test result of at least one sample based on analysis of the hematology analyzer 110, determines in real time whether a preset condition for triggering quality control is satisfied, and if the preset condition for triggering quality control is satisfied, selects a sample that has been analyzed by the hematology analyzer 110 as a quality control sample. It can be seen that the hematology analyzer 110 generally tests samples normally, and when the condition for triggering quality is satisfied, the disclosure may start quality control in real time in response to the condition for triggering quality. QC is short for quality control, and is a necessary operation to determine whether functions and performance of various systems, instruments, devices, and the like are normal.

The preset condition for triggering quality control includes at least one of: completion of testing of N^{th} sample after the hematology analyzer initially starts testing in each cycle, a preset time, a preset load and a preset test result , wherein N is a natural number not less than 1. For example, the controller selects a quality control sample every day after the first sample has been tested, or the controller selects a quality control sample at 9:00 a.m. every day, or the controller selects a quality control sample when a load of the sample analysis system is below a preset value, or the controller determines whether the first test results of the samples obtained by the hematology analyzer 110 are test results that satisfy a preset condition, and if yes, the controller selects a quality control sample. The test result that satisfies the preset condition may be that various blood routine examination result values all fall within normal ranges, or may be a test result including abnormality information. The former may be used for determining whether result values of a normal sample tested by the hematology analyzer and those of the normal sample tested by the cell image analysis apparatus are consistent, and the latter may be used for determining whether abnormality information of a sample tested by the hematology analyzer and that of the sample tested by the cell image analysis apparatus is consistent. The foregoing trigger condition may be set by a user, and after the preset condition for triggering quality control is satisfied, a quality control process may be automatically performed.

The controller selects a quality control sample based on the sample test results obtained by the hematology analyzer 110, wherein the selected quality control sample may be a sample with a normal result. Specifically, the controller selects a sample with a test value of a preset type of cells in the first test result that falls within a preset range, as a quality control sample. For example, a sample with a white blood cell count (WBC) that falls within a first preset range is selected as a quality control sample, a sample with a red blood cell count (RBC) that falls within a second preset range is selected as a quality control sample, or a sample with a mean corpuscular volume (MCV) that falls within a third range preset is selected as a quality control sample. Because one or more quality control samples may be selected, at least one of the three types of samples may be selected as the quality control sample, which may be specifically determined based on a quality control need. Herein, the first range, the second range, and the third range may be set based on a quality control need. For example, the first range is from 7.0 × 10⁹ to 10.0 × 10⁹/L, the second range is from 4.0 × 10¹² to 5.5 × 10¹²/L, and the third range is from 85 to 95 fL. Certainly, the selected quality control sample may alternatively be a sample with an abnormal result. Specifically, the controller selects a sample having a first test result containing abnormality information as a quality control sample. Preferably, the abnormality information includes at least one of malaria parasites, platelet aggregation, red blood cell aggregation, hematocrit (HCT) exceeding a preset threshold, uneven size of red blood cells, and abnormal white blood cells. Certainly, selected samples may include both a sample with a normal result and a sample with an abnormal result, so that quality control can be performed from two perspectives, thereby satisfying various quality control needs.

Step 1.3: The controller controls the dispatching apparatus, for example, the first track 150, to transfer the quality control sample to the smearing machine of the smear preparation apparatus 120.

Another method of obtaining a sample for quality control includes the following steps:
Step 1.1': The hematology analyzer 110 tests a sample to obtain a first test result of the sample. This step is the same as step 1.1 of the previous method.
Step 1.2': When a preset condition for triggering quality control is satisfied, a controller controls the dispatching apparatus, for example, the first track 150, to transfer the sample that has been tested by the hematology analyzer 110 to the smearing machine of the smear preparation apparatus 120, wherein the sample transferred to the smearing machine is to be used as a quality control sample. That is, in this method, without selecting a sample, the controller determines in real time whether the preset condition for triggering quality control is satisfied, and if the preset condition for triggering quality control is satisfied, the sample that has been tested by the hematology analyzer 110 is directly transferred to the smearing machine of the smear preparation apparatus 120. Similarly, one or more samples may be transferred to the smearing machine, as long as the quality control need is satisfied.

Still another method of obtaining a sample for quality control includes the following steps:
Step 1.1": The hematology analyzer 110 tests a sample to obtain a first test result of the sample. This step is the same as step 1.1 of the previous method.
Step 1.2": Upon completion of testing of N^{th} sample after the hematology analyzer 110 initially starts testing in each cycle, or at a preset time after testing is initially started in each cycle, the dispatching apparatus is controlled to transfer a sample that has been tested by the hematology analyzer 110 to the smearing machine of the smear preparation apparatus 120. The cycle may be a quality control cycle, for example, one natural day. That is, upon completion of testing of N^{th} sample after the hematology analyzer 110 initially starts testing every day, or at a preset time after testing is initially started every day, the dispatching apparatus is controlled to transfer a sample that has been tested by the hematology analyzer 110 to the smearing machine of the smear preparation apparatus 120, to start quality control.

Regardless of the method adopted in step 1, before step 1, the automated precision management method may further include: providing, by the controller, an automated quality control option on a display interface of the display apparatus for selection by a user, and after an instruction for selecting the automated quality control option is received, performing the automated quality control start step, that is, step 1.2, step 1.2', or step 1.2". In this way, the automated precision management method in the disclosure may be enabled or disabled by the user. If disabled, the user may manually perform the quality control operation.

Step 2: The controller controls the smearing machine of the smear preparation apparatus 120 to prepare a blood smear from the quality control sample. Specifically, the controller controls the smearing machine to smear the quality control sample based on a preset smearing parameter, wherein a smearing process includes dispensing the quality control sample onto a slide and spreading the sample on the slide into a blood film. The smearing parameter may include width, length, tail shape, and the like of the blood film, and the smearing machine may perform smearing based on the preset smearing parameter, to prepare a blood smear that satisfies the preset smearing parameter. The prepared blood smear is shown in FIG. 2. One or more blood smears may be prepared from a same sample, and the specific number of blood smears depends on a quality control need, thereby satisfying various quality control needs.

During preparation of the blood smear, the controller further controls the printing apparatus to provide sample information on the blood smear of the quality control sample, wherein the sample information includes a quality control marker. For example, the printing apparatus prints, sprays, attaches, writes, or draws the quality control marker on the label region shown in FIG. 2, so that the quality control blood smear has the quality control marker, which facilitates identification. Because the quality control marker is provided, in subsequent staining and imaging, the quality control blood smear is treated differently from regular samples, and corresponding staining and imaging may be performed for the quality control blood smear based on quality control needs, to realize better quality control.

Step 3: The controller controls the staining machine to stain the quality control blood smear, for example, the controls the staining machine to stain the blood film on the slide based on a preset staining parameter or a preset staining mode. The preset staining parameter may be a parameter corresponding to a characteristic (blood or body fluid) of the sample, or may be a parameter corresponding to a staining mode of the cell image analysis apparatus 130. In an embodiment, the smearing machine and the staining machine both select a preset parameter or a preset mode for smearing and staining for the quality control sample, thereby preparing a blood smear matching the preset parameter or the preset mode. After the cell image analysis apparatus 130 subsequently analyzes the blood smear, its test result may be used for determining quality of smearing and staining of the cell image analysis apparatus 130. It can be seen that sample selection, blood smear preparation and staining in the disclosure may all be performed based on quality control needs, so that quality control can be completed quickly.

After the staining machine stains the quality control blood smear, the quality control blood smear is cleaned and dried. Then the controller controls the dispatching apparatus, for example, the second transfer track 160, to transfer the quality control blood smear to the cell image analysis apparatus 130.

Step 4: The controller controls the cell image analysis apparatus 130 to image and analyze the quality control blood smear to obtain a second test result. Specifically, the controller controls working of the cell image analysis apparatus 130, the identification apparatus of the cell image analysis apparatus 130 identifies the quality control marker on the blood smear of the quality control sample, and therefore the cell image analysis apparatus 130 learns that this blood smear is a blood smear of the quality control sample, and then switches to a quality control mode and images and analyzes the quality control blood smear in the quality control mode to obtain the second test result. The cell image analysis apparatus 130 may use a slide scanner, an image captured in the quality control mode of the slide scanner is more comprehensive than an image captured in a regular mode, and a second test result obtained through analysis in the quality control mode is also more comprehensive than that obtained for a regular sample, thereby satisfying quality control needs. That is, the cell image analysis apparatus 130 can perform imaging and analysis based on quality control needs. For example, working modes of the cell image analysis apparatus 130 include a white blood cell analysis mode, a red blood cell analysis mode, a platelet analysis mode, and the like, which may be used to specifically analyze and test white blood cells, red blood cells, and platelets respectively. The quality control mode may be a combination of these three modes, and can be used to image and analyze various types of cells more comprehensively.

Step 5: The controller obtains the second test result of the quality control blood smear from the cell image analysis apparatus 130, compares the first test result and the second test result of the quality control sample, and controls the display apparatus to output a result of the comparison. When comparing the first test result with the second test result, if the first test result is used as a baseline, then it can be determined through the comparison whether the second test result is accurate, so as to perform quality control on the cell image analysis apparatus 130; if the second test result is used as a baseline, it can be determined through the comparison whether the first test result is accurate, so as to perform quality control on the hematology analyzer 110. Details are described below.

In the method shown in FIG. 6, before the hematology analyzer 110 tests the samples to be analyzed, quality control is further performed on the hematology analyzer 110; and if the hematology analyzer 110 passes quality control, the samples are tested to obtain the first test results of the samples. In other words, step 1 may be started after the hematology analyzer 110 passes quality control. In this way, in step 5, quality control may be performed on the cell image analysis apparatus 130 by using the first test result obtained by the hematology analyzer 110 as a baseline. The quality control for the hematology analyzer 110 may include quality control performed on the hematology analyzer by using a standard control product, or quality control performed by comparing results of a plurality of hematology analyzers. If a test result obtained by the hematology analyzer 110 for the standard control product is within a preset range, or if a test result obtained by the hematology analyzer 110 and a test result obtained by another analyzer for a same sample are consistent, the hematology analyzer 110 is deemed to pass quality control.

Comparing the first test result with the second test result of the quality control sample may specifically include: comparing a first test result value of a preset type of cells in the quality control sample in the first test result with a second test result value of the preset type of cells in the second test result, for example, comparing result values of lymphocytes and neutrophils in the first test result with those in the second test result; if a deviation between the first test result value and the second test result value of the preset type of cells of the quality control sample is outside a preset range, outputting prompt information. For example, if a lymphocyte ratio of the quality control sample in the first test result is 20%, a lymphocyte ratio of the quality control sample in the second test result is 30%, and a preset deviation range of lymphocytes is from -5% to 5%, then a deviation between the lymphocyte ratios in the first test result and the second test result is outside the preset range, and a display interface may display the deviation of 10% between the lymphocyte ratios, or may prompt that the deviation between the lymphocyte ratios is outside the preset range, which indicates that at least one of the results of the hematology analyzer and the cell image analysis apparatus is inaccurate, and at least one of the hematology analyzer and the cell image analysis apparatus fails to pass quality control.

In an embodiment, if the selected quality control sample is a normal sample, which, for example, has a WBC (white blood cell) count between 7.0 × 10⁹/L and 10.0 × 10⁹/L, an RBC (red blood cell) count between 4.0 × 10¹²/L and 5.5 × 10¹²/L, and an MCV (mean corpuscular volume) between 85 fL and 95 fL, the controller compares a white blood cell count of the quality control sample in the first test result with that in the second test result, and if a deviation between the two white blood cell counts is not outside the preset range, it indicates that the test of the white blood cell count conducted by the cell image analysis apparatus 130 satisfies a precision requirement. The controller compares a red blood cell count of the quality control sample in the first test result and that in the second test result, and if a deviation between the two red blood cell counts is not outside the preset range, it indicates that the test of the red blood cell count conducted by the cell image analysis apparatus 130 satisfies a precision requirement. The controller compares a mean corpuscular volume of red blood cells in the quality control sample in the first test result and that in the second test result, if a deviation between the two mean corpuscular volumes is not outside the preset range, it indicates that the test of the mean corpuscular volume conducted by the cell image analysis apparatus 130 satisfies a precision requirement.

If the hematology analyzer has been subjected to quality control before testing samples, and has passed quality control, in this embodiment, a deviation between a result of a preset parameter in the first test result and a result of the preset parameter in the second test result may be obtained through comparison to determine whether the test conducted by the cell image analysis apparatus 130 satisfies requirements, and if the deviation is outside the preset range, prompt information indicating that the cell image analysis apparatus 130 fails to pass quality control is output. Certainly, a ratio of the deviation between the result of the preset parameter in the first test result and the result of the preset parameter in the second test result may further be obtained through comparison to determine whether the test conducted by the cell image analysis apparatus 130 satisfies requirements. Specifically, the controller obtains a ration or percentage of deviation between the second test result and the first test result of the quality control sample through comparison. For example, the ratio of deviation may be obtained by multiplying by 100% a quotient of dividing the deviation by the first test result value. If the ratio of deviation between the second test result and the first test result of the quality control sample is outside a corresponding preset range, the controller outputs, via the display apparatus, prompt information indicating that the cell image analysis apparatus 130 fails to pass quality control. Certainly, the prompt information may be more specific, for example, prompt information indicating that a test result of a specific type of cells obtained by the cell image analysis apparatus 130 does not satisfy the precision requirement is output.

Herein, determining whether the ratio of deviation between the first test result and the second test result of the quality control sample is outside a preset range may include: comparing result values of a plurality of preset parameters. The result values of the preset parameters may be test values of various types of cells such as neutrophilic segmented granulocytes, lymphocytes, and eosinophils. If a deviation between the result values of any type of cells in the first test result and in the second test result is outside a range, it is indicated that the ratio of deviation between the first test result and the second test result of the quality control sample is outside the preset range. If deviations of the result values of all preset parameters in the first test result and in the second test result are not outside the preset range, it is indicated that the ratio of deviation between the first test result and the second test result of the quality control sample is not outside the preset range.

Certainly, in an optional embodiment, if a deviation between corresponding results in the first test result and in the second test result of the quality control sample is outside a preset range, the controller controls the dispatching apparatus to transfer the sample to be analyzed (the quality control sample) to another hematology analyzer for retesting, to obtain a first retest result using said hematology analyzer; the controller compares the first retest result with the second test result, to determine whether a deviation between the first retest result value and the second test result value is outside a preset range, whether a ration of deviation between the first retest result and the second test result is outside a preset range, and so on. A specific process is the same as the foregoing comparison process of the first test result and the second test result, and details are not described herein again. Retesting by another hematology analyzer instead of the hematology analyzer can eliminate interference caused by the hematology analyzer itself to quality control for the cell image analysis apparatus 130.

In an optional embodiment, if a deviation between corresponding results in the first test result and in the second test result of the quality control sample is outside a preset range, the controller may alternatively control the dispatching apparatus to transfer the sample to be analyzed (quality control sample) to another cell image analysis apparatus for retesting, to obtain a second retest result using said cell image analysis apparatus; and then compare the second retest result with the first test result, to determine whether a deviation between the first test result value and the second retest result value is outside a preset range, whether a ratio of deviation between the first test result and the second retest result is outside a preset range, and so on. A specific process is the same as the foregoing comparison process of the first test result and the second test result, and details are not described herein again. Retesting by another cell image analysis apparatus instead of the cell image analysis apparatus 130 can eliminate interference caused by the cell image analysis apparatus 130 itself to quality control for the cell analyzer.

In an optional embodiment, if a deviation between corresponding results in the first test result and in the second test result of the quality control sample is outside a preset range, the controller may alternatively control the dispatching apparatus to transfer the sample to be analyzed (quality control sample) to the original hematology analyzer and the original cell image analysis apparatus for retesting, to obtain a first retest result using the original hematology analyzer and a second retest result using the original cell image analysis apparatus; and further compare the first retest result with the second retest result. A specific comparison process thereof is the same as the foregoing comparison process of the first test result and the second test result, and details are not described herein again.

As mentioned above, retesting of the quality control sample includes retesting by a new hematology analyzer, retesting by a new cell image analysis apparatus, or retesting by the original hematology analyzer or cell image analysis apparatus. Retesting of the quality control sample is performed again upon failure of initial quality control, and quality control determination may be performed again to obtain a more accurate quality control result.

In an optional embodiment, if a deviation between a corresponding result in the first test result of the quality control sample and that in the second test result of the quality control sample is outside a preset range, the controller may reselect a quality control sample from the samples to be analyzed that have been tested to conduct retesting, and perform quality control determination again to improve accuracy.

It can be seen that automated quality control for the cell image analysis apparatus 130 is achieved through the foregoing process, facilitating user to control the precision of the cell image analysis apparatus 130. The accuracy of test results of the cell image analysis apparatus can only be guaranteed after the cell image analysis apparatus 130 passes quality control.

The cell image analysis apparatus 130 and the hematology analyzer 110 have their respective advantages in sample testing. The cell image analysis apparatus 130 is more accurate than the hematology analyzer 110 in terms of morphology testing of cells. Therefore, test results obtained by the cell image analysis apparatus 130 may be used for quality control determination for the hematology analyzer 110. Specifically, the first test result of the quality control sample includes abnormality information that satisfies the preset condition for triggering quality control. For example, in step 1, a sample with abnormality information is selected as a quality control sample, and the quality control sample is further used for quality control on the hematology analyzer 110. The controller determines, through comparison, whether abnormality information in the first test result of the quality control sample is consistent with abnormality information in the second test result of the quality control sample; and if the abnormality information in the first test result of the quality control sample is inconsistent with the abnormality information in the second test result of the quality control sample, outputting corresponding prompt information via the display apparatus, for example, outputting prompt information indicating that testing performed by the hematology analyzer 110 for abnormality information is unsatisfactory. Certainly, if the two test results have consistent abnormality information, prompt information indicating that testing performed by the hematology analyzer 110 for abnormality information is satisfactory is outputted via the display apparatus. For example, the cell image analysis apparatus 130 can generally obtain more accurate corresponding test results for abnormality information such as malaria parasites, PLT aggregation, red blood cell aggregation, and abnormal cell warning. In this case, precision management may be performed on the hematology analyzer 110 based on the test results obtained by the cell image analyzer 130. In embodiments of the disclosure, automated quality control is implemented for both the cell image analysis apparatus 130 and the hematology analyzer 110.

Further, in an embodiment of the disclosure, quality of smearing and staining of the quality control blood smear may be further determined based on the second test result obtained by the cell image analysis apparatus 130, that is, quality control may also be determined for the smearing machine and the staining machine. The second test result includes test information based on cell imaging and analysis, and test information related to quality of smearing and staining of the cell image analysis apparatus. When imaging the quality control blood smear in the quality control mode, the cell image analysis apparatus 130 may capture images of the quality control blood smear, and may identify blood film shape, blood film color, and the like based on an image identification algorithm; or the cell image analysis apparatus 130 may scan the blood smear by using its objective lens to identify information such as cell distribution, blood film boundary, blood film shape, and blood film color of the quality control blood smear. After the information related to smearing and staining is obtained, whether the quality of smearing and staining meets expectation may be determined. Because the quality control blood smear is prepared based on the preset smearing parameter and the preset staining parameter or the preset staining mode, blood film size and shape, cell distribution, color, and the like of the quality control blood smear are supposed to match the preset smearing parameter and the preset staining parameter or the preset staining mode. If it is found through the cell image analysis apparatus 130 that the blood film size and shape, cell distribution, color, or the like of the quality control blood smear does not match the preset smearing parameter and the preset staining parameter or the preset staining mode, it may be determined that the smear preparation apparatus fails to pass quality control.

Specifically, the controller may identify at least one of blood film morphology and cell distribution of the quality control blood smear based on the test information related to smearing in the second test result; and determine smearing quality of the smearing machine based on at least one of the blood film morphology and cell distribution of the quality control blood smear. The test information related to smearing in the second test result includes at least one of blood film morphology and cell distribution of the quality control blood smear that are obtained by the cell image analysis apparatus 130, for example, a blood film morphology image and a cell distribution image of the quality control blood smear that may be obtained by the image analysis apparatus 130. The controller may identify the blood film morphology in the image based on the blood film morphology image of the quality control blood smear. The controller identifies the cell distribution based on the cell distribution image of the quality control blood smear, for example, to determine whether positional distribution of specified cells in the blood film is satisfactory, if not, it indicates that the smearing is unqualified.

Similarly, the controller may further identify at least one of blood film color and color shade of the quality control blood smear based on the test information related to staining in the second test result; and determine staining quality of the smear preparation apparatus based on at least one of the blood film color and the color shade of the quality control blood smear. Herein, the test information related to staining in the second test result includes at least one of blood film color and color shade of the quality control blood smear that are obtained by the cell image analysis apparatus 130. For example, the controller identifies the blood film color (such as chromatic value) and the color shade (such as gray-scale value) based on the blood film image in the second test result, or certainly, may obtain the blood film color and the color shade of the quality control blood smear directly by using the cell image analysis apparatus 130; determines whether the blood film color is a preset color, and if the blood film color is not the preset color, it indicates that the staining performed by the staining machine is unqualified; and determines whether the color shade of the blood film is consistent with a preset depth, and if the color shade of the blood film is not consistent with the preset depth, it indicates that the staining is unqualified.

Therefore, automated quality control for the sample analysis system may be implemented through the foregoing process, thereby realizing high automation.

In the process shown in FIG. 6, in step 4, after the second test result is obtained, the controller determines the smearing quality and the staining quality, and step 5 is performed after it is determined that the smearing quality and the staining quality is qualified. In other words, quality control is performed on the cell image analysis apparatus 130 after it is determined that the smearing machine and staining machine are functioning properly in performing smearing and staining. In this way, interference caused by the smearing quality and the staining quality to the quality control for the cell image analysis apparatus 130 is avoided, thereby obtaining high quality control accuracy.

In conclusion, in the disclosure, quality control is implemented for the smearing machine, the staining machine, and the slide scanner based on the entire blood analysis pipeline system. Not only the entire blood analysis pipeline system performs processing automatically with little or no manual participation, and the test results may also reflect consistency and correlation of the entire pipeline system, thereby facilitating comprehensive determination on the pipeline system. Because a regular sample is tested only based on test items to obtain a result, a test process is simple, and the result can reflect only some functions and features of the system. In the disclosure, however, processes such as sample selection, smearing, staining, and slide scanning are all performed in accordance with quality control needs, with functions and features of the system all covered, and quality control determination is thus comprehensive with high accuracy.

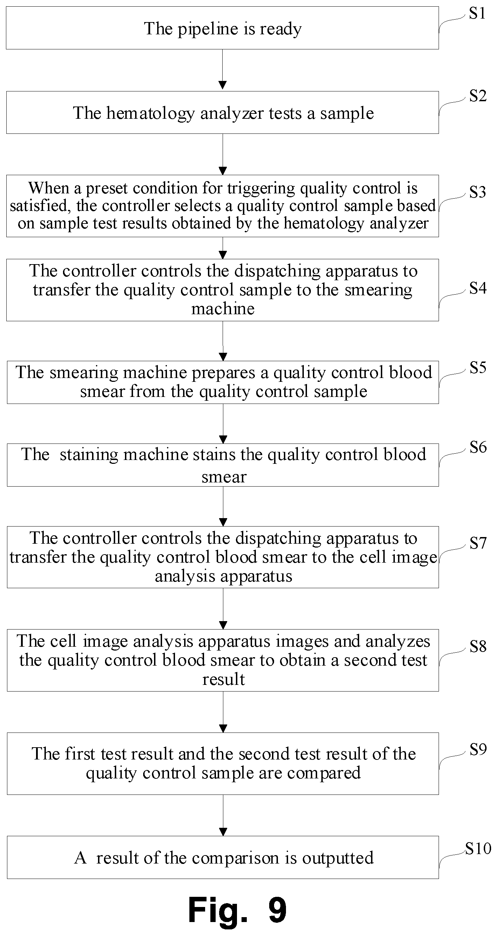

As shown in FIG. 9, in an embodiment, an automated precision management method for a sample analysis system is provided and applied to a blood analysis pipeline system including a hematology analyzer, a smear preparation apparatus and a cell image analysis apparatus. The method includes the following steps:
Step S1: After the pipeline system is ready, a user places samples to be analyzed. The pipeline system being ready means that software and hardware of the pipeline system are ready in a state capable of testing samples after the pipeline system is turned on or quits hibernation. After the samples to be analyzed are placed, the system may start a process of automated sample transfer and testing.

Batch sample testing is started. Samples in a batch are samples placed into one or more sample racks by the user, and the hematology analyzer may test these samples in sequence. The sample rack is configured to hold at least one sample, and usually is capable of holding a plurality of samples.

Step S2: The hematology analyzer tests a current sample at its test position to obtain a first test result of the sample, which is a blood routine examination result in this embodiment.

Step S3: A controller automatically selects a sample for preparing a quality control blood smear based on the blood routine examination result. The sample needs to satisfy a specific parameter requirement, for example, the sample has a WBC count between 7.0 × 10⁹/L and 10.0 × 10⁹/L, an RBC count between 4.0 × 10¹²/L and 5.5 × 10¹²/L, an MCV value between 85 f]L and 95 fL, and so on. If a blood routine examination result of a specific sample satisfies this requirement, the sample may be automatically selected as a quality control sample. There may be one quality control sample. Alternatively, there may be a plurality of quality control samples. For example, some quality control samples are samples with all test items falling within a normal range, or some quality control samples are samples with some parameters being outside a limit, for example, samples whose blood routine examination results include high HCT, uneven size of RBCs, abnormal white blood cells, and the like.

Steps S4: The controller controls the dispatching apparatus to automatically transfer the quality control sample to the smearing machine.

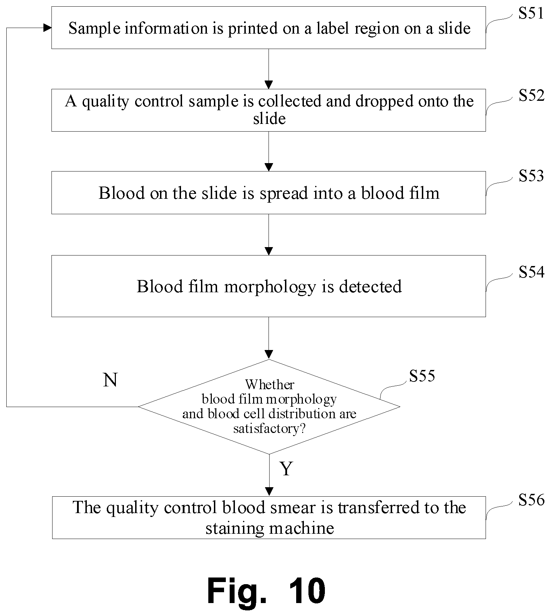

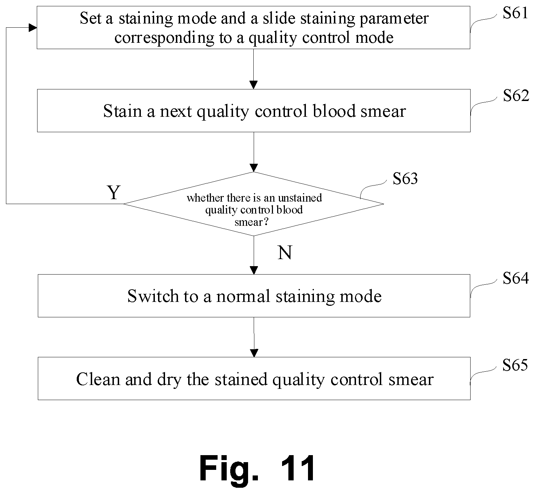

Step S5: The controller controls the smear preparation apparatus to prepare a quality control blood smear, namely to collect a blood sample, drop the blood sample onto a slide, and spread the blood sample into a blood film. As shown in FIG. 10, a method for preparing the quality control blood smear includes the following steps:
Step S51: The printing apparatus prints sample information on a label region on a slide, wherein the sample information includes a sample number, a barcode, a quality control marker, and the like.
Step S52: The smearing machine collects the quality control sample and drops the quality control sample onto the slide.
Step S53: The smearing machine spreads the blood on the slide into a blood film. Specifically, the controller controls the smearing machine to spread the blood on the slide into a blood film based on a preset smearing parameter. The smearing parameter may include width, length, tail shape, and the like of the blood film, and the smearing machine may perform smearing based on the preset smearing parameter, to prepare a blood smear that satisfies the preset smearing parameter. The prepared blood smear is shown in FIG. 2. In embodiments of the disclosure, one or more quality control blood smears may be prepared from each quality control sample based on quality control requirements, or blood smears are prepared from a plurality of different quality control samples.
Step S54: Blood film morphology is detected. For example, the smearing machine detects the blood film morphology, to facilitate determination in the next step.
Step S55: Whether the blood film morphology and blood cell distribution are satisfactory is determined. For example, the smearing machine determines whether the detected blood film morphology (width, length, tail shape, and the like of the blood film) matches the preset smearing parameter, and determines whether positional distribution of specified cells in the blood film is satisfactory.
Step S56: If the blood film morphology and blood cell distribution of the quality control blood smear are satisfactory, the quality control blood smear is transferred to the staining machine or staining module by the dispatching apparatus. If at least one of the blood film morphology and the blood cell distribution of the quality control blood smear is unsatisfactory, the process returns to step S51 to prepare a new blood smear from the quality control sample.
Step S6: The staining machine or staining module stains the quality control blood smear. As shown in FIG. 11, staining may specifically include the following steps:
   Step S61: The staining machine or staining module automatically sets a staining mode and a staining parameter. The staining machine or staining module generally has a plurality of staining modes and a plurality of staining parameters, and different staining modes or staining parameters correspond to different staining effects. For the quality control sample, a staining mode and/or a staining parameter corresponding to the quality control mode may be selected.
   Step S62: The staining machine or staining module stains a next quality control blood smear.
   Step S63: The staining machine or staining module determines whether there is any unstained quality control blood smear. If no, the next step S64 is performed; if there is an unstained quality control blood smear, the process returns to step S61 to continue to stain the next sample.
   Step S64: A working mode of the staining machine or staining module is switched to a normal staining mode, to prepare for staining blood smears of ordinary patients, other than the quality control sample.
   Step S65: The staining machine or staining module cleans and dries the stained quality control smear.
Steps S7: The controller controls the dispatching apparatus to transfer the quality control blood smear to the cell image analysis apparatus.
Step S8: After the stained and dried slide is transferred to the cell image analysis apparatus, the cell image analysis apparatus automatically switches to the quality control mode according to the quality control marker on the blood smear, and performs cell imaging and analysis in the quality control mode to obtain a second test result.

The controller determines whether the smearing machine and the staining machine works properly based on imaging and analysis of the blood smear performed by the cell image analysis apparatus.

Step S9: The controller compares a morphology analysis result obtained by the cell image analysis apparatus with a test result obtained by one or more earlier used hematology analyzers, to determine whether the cell image analysis apparatus passes quality control. A specific process in which the controller compares the morphology analysis result obtained by the cell image analysis apparatus with the test result obtained by the earlier used hematology analyzer is described in the foregoing embodiments. Certainly, a plurality of hematology analyzers may alternatively be used to test the quality control sample in advance, and then the controller compares the morphology analysis result obtained by the cell image analysis apparatus with test results obtained by the plurality of hematology analyzers, so as to further ensure accuracy of the first test result, facilitating quality control determination for the cell image analysis apparatus. The specific quality control for the cell image analysis apparatus has been described in the foregoing embodiments, and details are not described herein again.

The controller also determines whether some test results obtained by the hematology analyzer satisfy expectation based on the morphology analysis result obtained by the cell image analysis apparatus (an instrument classification result obtained by the cell image analysis apparatus or an accurate result obtained through manual adjustment). For example, for some items that cannot be tested through regular quality control for the hematology analyzer, for example, accuracy of malaria parasites, PLT aggregation, red blood cell aggregation, abnormal cell warning, and the like, regular quality control for the hematology analyzer generally cannot lead to an accurate quality control result. The cell image analysis apparatus, however, can more intuitively and accurately test the items such as malaria parasites, PLT aggregation, red blood cell aggregation, and abnormal cell warning. In this case, test results obtained by the cell image analysis apparatus may be used for quality control on test results of these items obtained by the hematology analyzer.

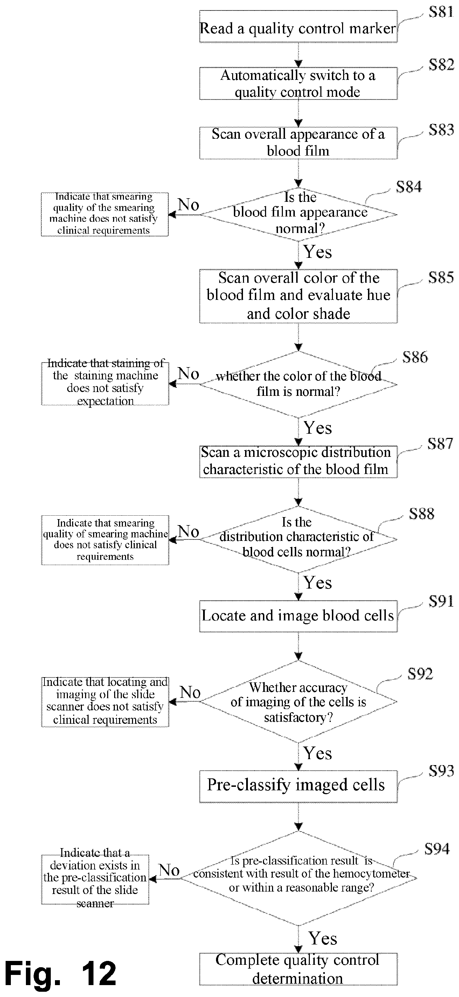

Therefore, a method for automated precision management on various instruments in a pipeline system by using a quality control blood smear may be derived. As shown in FIG. 12, the method specifically includes the following steps:
Step S81: A cell image analysis apparatus reads a quality control marker of a quality control blood smear.
Step S82: Triggered by the quality control marker, the cell image analysis apparatus automatically switches to a quality control mode.
Step S83: The cell image analysis apparatus scans blood film appearance, for example, scans the blood film appearance to obtain a corresponding image and outputs the image to a controller.
Step S84: A controller determines whether the blood film appearance is normal, and if not, it indicates that smearing quality of a smearing machine is unqualified, and a corresponding prompt may be outputted via a display. The specific process has been described in the foregoing embodiments, and details are not described herein again.
Step S85: The cell image analysis apparatus scans overall color of the blood film, evaluates hue and color shade thereof, and outputs the same to the controller.
Step S86: The controller determines whether the color of the blood film is abnormal, and if the color is abnormal, it indicates that staining quality of a staining machine is unqualified. The specific process has been described in the foregoing embodiments, and details are not described herein again.
Step S87: The cell image analysis apparatus scans a microscopic distribution characteristic of the blood film to identify cell distribution shape. For example, thicknesses of a normal blood film gradually decrease from a head portion to a tail portion.
Step S88: The cell image analysis apparatus scans a microscopic distribution characteristic of the blood film, the controller determines whether blood film distribution or cell distribution is satisfactory, and if the cell distribution is unsatisfactory, it indicates that smearing quality of the smearing machine is unqualified, and corresponding prompt information may be outputted. The specific process has been described in the foregoing embodiments, and details are not described herein again.
Step S91: The cell image analysis apparatus locates and images cells of the blood smear. The controller obtains images captured by the cell image analysis apparatus.
Step S92: The controller determines whether locating and imaging functions of the cell image analysis apparatus are satisfactory. The cell image analysis apparatus typically locates cells in the blood smear by using a low-power lens, for example a 10x lens, and after a target number of cells, for example, 100 white blood cells are located, a high-power lens, for example a 100x lens is used to image the located cells. If the cell image analysis apparatus is unable to locate the target number of cells, or unable to image the target number of cells with the high-power lens after the target number of cells are located, it indicates that the locating or imaging function of the cell image analysis apparatus is unsatisfactory.
Step S93: The cell image analysis apparatus images and pre-classifies cells in the quality control blood smear. The cell image analysis apparatus images a plurality of types of cells, and can output different types of cell images and pre-classify these cells. Pre-classification means that the cell image analysis apparatus automatically classifies and counts the imaged cells. A result of the pre-classification generally still needs to be manually confirmed and adjusted before test results of the cell image analysis apparatus can be output.
Step S94: The controller determines whether the pre-classification result of the quality control blood smear and a result obtained by the hematology analyzer are consistent or whether a deviation therebetween is within an acceptable range. If the results are inconsistent or the deviation is greater than the acceptable range, it indicates that accuracy of the classification result of the cell image analysis apparatus is unsatisfactory. For example, if a deviation between a five-classification result of white blood cells obtained by the hematology analyzer and the pre-classification result of the cell image analysis apparatus is outside an acceptable range, it indicates that accuracy of the classification result of the cell image analysis apparatus is unsatisfactory. The specific process has been described in the foregoing embodiments, and details are not described herein again.

If the two results are consistent or the deviation therebetween is within the acceptable range, it indicates that accuracy of the classification result of the cell image analysis apparatus is satisfactory. If the five-classification result of white blood cells obtained by the hematology analyzer and the pre-classification result of the cell image analysis apparatus are consistent or the deviation is within the acceptable range, it indicates that accuracy of the classification result of the cell image analysis apparatus is satisfactory.

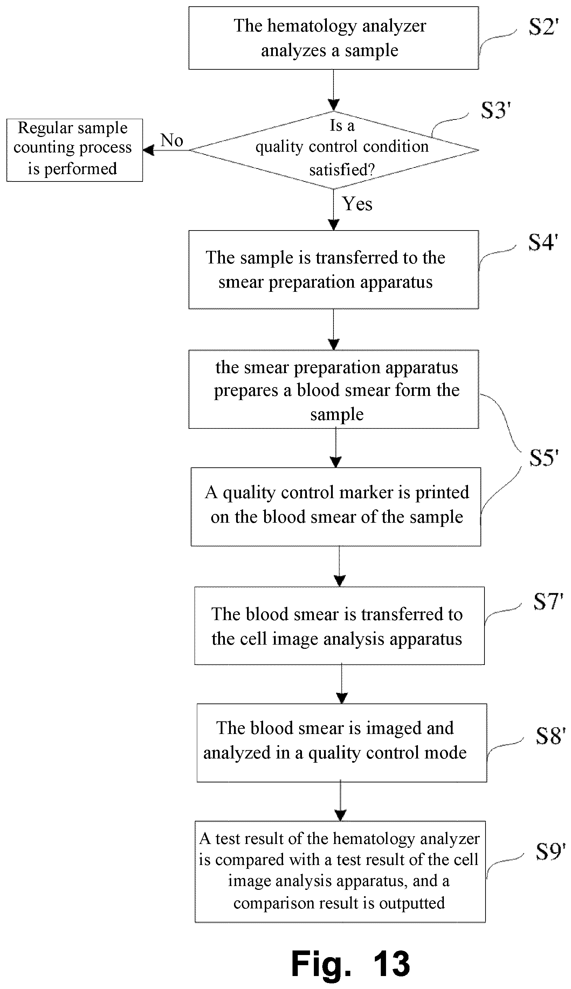

Referring to FIG. 13, in another embodiment, an automated precision management method applied to a sample analysis system is proposed. The sample analysis system may be a blood analysis pipeline system including a hematology analyzer, a smear preparation apparatus and a cell image analysis apparatus. The method includes the following steps:
Step S2': The hematology analyzer analyzes a sample to obtain a first test result of the sample, for example, a blood routine examination result.
Step S3': Whether a quality control condition is satisfied is determined, and if not, a common sample counting process is performed on the sample being currently tested. The quality control condition includes that the first test result meets a preset condition. For example, if a white blood cell count in the first test result of the sample is greater than 7.0 (10^{^9}/L), the sample may be selected as a quality control sample. The quality control condition may further include a preset time, for example, samples with a first test result meeting the preset condition are selected between 8:00 and 8:30 every day. Alternatively, the quality control condition may include completion of testing of N^{th} sample in each quality control cycle. For example, quality control is performed once a day, and the quality control cycle is one day. After the pipeline system is started every day, a quality control process is automatically started after the hematology analyzer tests the first sample; or after the pipeline system is started every day, the hematology analyzer tests a plurality of samples (for example, 3 samples), and then a sample with a first test result meeting the preset condition is selected from the plurality of samples, to start a quality control process. In this way, a quality control process may be automatically completed timely after the pipeline system starts testing every day, to ensure the accuracy of sample analysis on the day. The quality control condition may alternatively include a preset load. For example, quality control is selected to be performed at a time when load is light, which may improve quality control speed and avoid affecting normal testing of patient samples.
Step S4': If the quality control condition is satisfied, the sample is transferred to the smear preparation apparatus.
Step S5': The smear preparation apparatus prepares a blood smear from the sample , and prints a quality control marker on the blood smear of the sample.
Step S7': The blood smear of the sample is transferred to the cell image analysis apparatus.
Step S8': The cell image analysis apparatus identifies the quality control marker of the sample, switches to a quality control mode, and images and analyzes the blood smear of the sample to obtain a second test result based on the imaging and analysis.
Step S9': The second test result of the sample is compared with the first test result, and quality control reference information is outputted based on a comparison result.

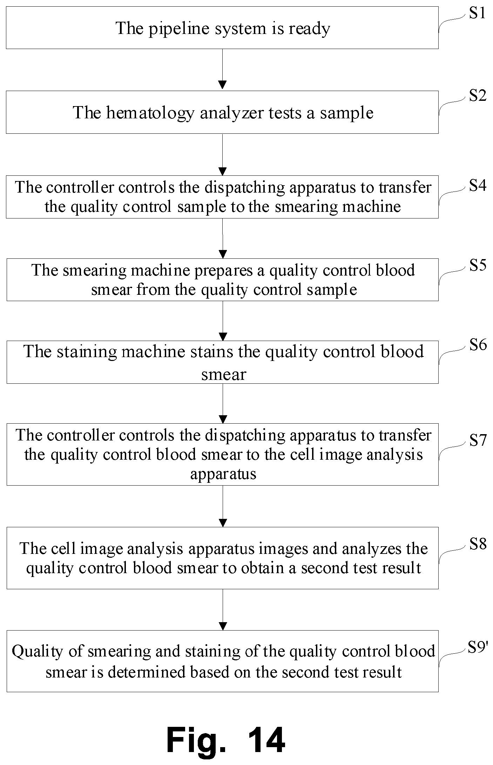

The specific processes of the steps in the embodiment illustrated in FIG. 13 have been described in the foregoing embodiments, and details are not described herein again. Certainly, the foregoing embodiments may alternatively be combined with each other. Particularly, quality control for the hematology analyzer, quality control for the smear preparation apparatus, quality control for the cell image analysis apparatus, and the like may be combined with each other. For example, based on the foregoing sample analysis system, quality control is performed on the smear preparation apparatus separately, that is, quality of smearing and staining is determined. A specific process is shown in FIG. 14, and includes steps S1 and S2, steps S4 to S8, and step S9', wherein steps S1 and S2, and steps S4 to S8 may be the same as those in the embodiment illustrated in FIG. 9, and details are not described herein again.

For step S9', the controller determines quality of smearing and staining of the quality control blood smear based on the second test result. The specific process has been described in detail in the foregoing embodiments, and details are not described herein again.

Those skilled in the art may understand that all or some of functions of various methods in the foregoing embodiments may be implemented through hardware or a computer program. When all or some of the functions in the foregoing embodiments are implemented through a computer program, the program may be stored in a computer-readable storage medium which may include: a read-only memory, a random access memory, a magnetic disk, an optical disc, a hard disk, or the like. A computer executes the program to implement the foregoing functions. For example, the program is stored in a memory of a device, and when the program in the memory is executed by a processor, all or some of the foregoing functions may be implemented. In addition, when all or some of the functions in the foregoing embodiments are implemented through a computer program, the program may alternatively be stored in a storage medium such as a server, another computer, a magnetic disk, an optical disc, a flash drive, or a removable hard disk, and downloaded or replicated for storage in a memory of a local device or version update is performed on a system of the local device. When a processor executes the program in the memory, all or some of the functions in the foregoing embodiments may be implemented.

Descriptions are provided herein with reference to various exemplary embodiments. However, those skilled in the art should understand that changes and modifications may be made to the exemplary embodiments without departing from the scope of this specification. For example, various operational steps and components for executing the operational steps may be implemented in different methods based on specific application or in consideration of any number of cost functions associated with operations of the system (for example, one or more steps may be deleted, modified or incorporated into other steps).

In addition, those skilled in the art can understand that the principles herein may be reflected in a computer program product in a computer-readable storage medium, where the readable storage medium is loaded with computer-readable program code in advance. Any tangible non-transitory computer-readable storage medium may be used, including a magnetic storage device (a hard disk, a floppy disk, or the like), an optical storage device (CD-ROM, DVD, Blu-ray disc, or the like), a flash memory, and/or the like. These computer program instructions may be loaded on a general-purpose computer, a special-purpose computer, or other programmable data processing devices to form a machine, such that these instructions, when executed on a computer or other programmable data processing apparatuses, may produce a means for implementing a specified function. These computer program instructions may alternatively be stored in a computer-readable memory. The computer-readable memory may instruct a computer or other programmable data processing devices to operate in a particular manner, such that the instructions stored in the computer-readable memory may produce an article of manufacture which includes a means for implementing a specified function. The computer program instructions may alternatively be loaded onto a computer or other programmable data processing devices to perform a series of operational steps on the computer or other programmable devices to produce a computer-implemented process, such that the instructions, when executed on the computer or other programmable devices, may provide steps for implementing a specified function.

Although the principles herein are shown in various embodiments, many modifications of structures, arrangements, proportions, elements, materials, and components particularly applicable to specific environmental and operating requirements may be made without departing from the principles and scope of the disclosure. These modifications and other changes or corrections fall within the scope of this specification.

The foregoing detailed descriptions are provided with reference to various embodiments. However, those skilled in the art should understand that various modifications and changes may be made without departing from the scope of the disclosure. Therefore, the disclosure is intended for an illustrative purpose other than a limitative purpose, and all these modifications fall within the scope of the disclosure. Similarly, the advantages, other advantages, and solutions to problems of the various embodiments are described above. However, the benefits, the advantages, the solutions to the problems, and any of their contributing factors, or solutions clarifying them should not be construed to be critical, necessary, or essential. The term "include" used herein and any other variations thereof all refer to a non-exclusive inclusion, such that a process, method, article, or device including a list of elements includes not only these elements, but also other elements that are not expressly listed or not inherent to the process, method, system, article, or device. In addition, the term "couple" used herein and any other variations thereof refer to a physical connection, an electrical connection, a magnetic connection, an optical connection, a communication connection, a functional connection, and/or any other connections.

Those skilled in the art should understand that many changes may be made to the details of the foregoing embodiments without departing from the basic principles of the disclosure. Therefore, the scope of the disclosure should be determined in accordance with the following claims.

### EXAMPLES

1. An automated precision management method for a sample analysis system, characterized in that the method comprises the following steps:
   testing samples to be analyzed by a hematology analyzer;
   when a preset condition for triggering quality control is satisfied, selecting, by a controller, a quality control sample from the samples that have been tested, based on sample test results obtained by the hematology analyzer, wherein the result of the quality control sample tested by the hematology analyzer is a first test result;
   controlling, by the controller, a dispatching apparatus to transfer the quality control sample to a smearing machine;
   preparing a quality control blood smear from the quality control sample by the smearing machine;
   staining the quality control blood smear by a staining machine;
   controlling, by the controller, the dispatching apparatus to transfer the quality control blood smear to a cell image analysis apparatus;
   imaging and analyzing the quality control blood smear by the cell image analysis apparatus, to obtain a second test result;
   comparing the first test result with the second test result of the quality control sample; and
   outputting a result of the comparison.
2. The method of example 1, wherein the preset condition for triggering quality control comprises at least one of: completion of testing N^{th} sample after the hematology analyzer initially starts testing in each cycle, a preset time, a preset load and a preset test result, wherein N is a natural number not less than 1.
3. The method of example 1, wherein comparing the first test result with the second test result of the quality control sample comprises:
   comparing a first test result value of a preset type of cells in the quality control sample in the first test result with a second test result value of the preset type of cells in the second test result; and
   outputting prompt information if a deviation between the first test result value and the second test result value of the preset type of cells in the quality control sample is outside a preset range.
4. The method of any one of examples 1 to 3, wherein before testing samples to be analyzed by a hematology analyzer, the method further comprises: performing quality control on the hematology analyzer; and if the hematology analyzer passes the quality control, testing the samples to obtain first test results of the samples.
5. The method of example 4, further comprising: if the deviation between the first test result value and the second test result value of the preset type of cells in the quality control sample is outside the preset range, outputting prompt information indicating that the cell image analysis apparatus fails to pass quality control.
6. The method of example 1, wherein the first test result of the quality control sample comprises abnormality information, and comparing the first test result with the second result of the quality control sample comprises:
   checking whether the abnormality information in the first test result of the quality control sample and abnormality information in the second test result of the quality control sample are consistent; and
   outputting prompt information if the abnormality information in the first test result of the quality control sample and the abnormality information in the second test result of the quality control sample are inconsistent.
7. The method of example 6, wherein the abnormality information comprises at least one of malaria parasites, platelet aggregation, red blood cell aggregation, hematocrit exceeding a preset threshold, uneven size of red blood cells, and abnormal white blood cells.
8. The method of example 1, further comprising: determining quality of smearing and/or staining of the quality control blood smear, based on test information related to smearing and/or staining of the quality control blood smear in the second test result.
9. The method of example 8, wherein the test information related to smearing in the second test result comprises at least one of blood film morphology and cell distribution of the quality control blood smear that are obtained by the cell image analysis apparatus.
10. The method of example 8, wherein the test information related to staining in the second test result comprises at least one of blood film color and color shade of the quality control blood smear that are obtained by the cell image analysis apparatus.
11. The method of example 8, wherein comparing the first test result with the second test result of the quality control sample comprises:
   comparing the first test result with the second test result of the quality control sample after the smearing quality and the staining quality are determined to be satisfactory.
12. The method of example 1, wherein selecting a quality control sample based on the sample test results obtained by the hematology analyzer comprises: selecting a sample, which has a first test result containing a test value of a preset type of cells that falls within a preset range, as the quality control sample.
13. The method of example 12, wherein the test value of the preset type of cells in the first test result that falls within the preset range comprises at least one of: a white blood cell count that falls within a first preset range, a red blood cell count that falls within a second preset range, and a mean corpuscular volume that falls within a third preset range.
14. The method of example 1, wherein selecting a quality control sample based on the sample test results obtained by the hematology analyzer comprises: selecting a sample having a first test result containing abnormality information as the quality control sample, wherein preferably the abnormality information comprises at least one of malaria parasites, platelet aggregation, red blood cell aggregation, hematocrit exceeding a preset threshold, uneven size of red blood cells, and abnormal white blood cells.
15. The method of any one of examples 1 to 14, further comprising:
   if a deviation between corresponding results in the first test result and in the second test result of the quality control sample is outside a preset range, controlling the dispatching apparatus to transfer the sample to be analyzed to another hematology analyzer for retesting, so as to obtain a first retest result using said hematology analyzer; and comparing the first retest result with the second test result; or
   if a deviation between corresponding results in the first test result and in the second test result of the quality control sample is outside a preset range, controlling the dispatching apparatus to transfer the sample to be analyzed to another cell image analysis apparatus for retesting, so as to obtain a second retest result using said cell image analysis apparatus; and comparing the first test result with the second retest result; or
   if a deviation between corresponding results in the first test result and in the second test result of the quality control sample is outside a preset range, controlling the dispatching apparatus to transfer the sample to be analyzed to the original hematology analyzer and the original cell image analysis apparatus for retesting, so as to obtain a first retest result using the hematology analyzer and a second retest result using the cell image analysis apparatus; and comparing the first retest result with the second retest result.
16. The method of any one of examples 1 to 14, further comprising: if a deviation between corresponding results in the first test result and in the second test result of the quality control sample is outside a preset range, reselecting a quality control sample from the samples to be analyzed that have been tested.
17. The method of example 1, further comprising:
   printing a quality control marker on the quality control sample, and the cell image analysis apparatus switches to a quality control mode to image and analyze the quality control sample when identifying the quality control marker.
18. A sample analysis system, characterized in that the sample analysis system comprises:
   a hematology analyzer configured to test at least one sample;
   a controller configured to obtain a first test result of the at least one sample based on analysis of the hematology analyzer, determine in real time whether a preset condition for triggering quality control is satisfied, and if the preset condition for triggering quality control is satisfied, select a sample that has been analyzed by the hematology analyzer as a quality control sample; and the controller is further configured to control a dispatching apparatus to transfer the quality control sample to a smear preparation apparatus;
   the smear preparation apparatus configured to prepare a blood smear from the quality control sample; and
   a cell image analysis apparatus configured to image and analyze the blood smear and obtain a second test result based on the imaging and analysis;
   wherein the controller is further configured to:
      compare corresponding information in the second test result with that in the first test result; and
      control a display apparatus to output a result of the comparison.
19. The sample analysis system of example 18, wherein the smear preparation apparatus comprises:
   a smearing machine configured to smear the quality control sample based on a preset smearing parameter, wherein the smearing process comprises dispensing the quality control sample to a slide and spreading the sample on the slide into a blood film;
   a staining machine configured to stain the blood film on the slide based on a preset staining parameter; and
   a printing apparatus configured to print sample information on the blood smear of the quality control sample, wherein the sample information comprises a quality control marker.
20. The sample analysis system of example 19, wherein the cell image analysis apparatus comprises an identification apparatus configured to identify the quality control marker on the blood smear of the quality control sample.
21. The sample analysis system of any one of examples 18 to 20, wherein the second test result comprises test information based on cell imaging and analysis, and test information related to quality of smearing and/or staining of the cell image analysis apparatus.
22. The sample analysis system of example 21, wherein the controller is further configured to determine quality of smearing and/or staining of the smear preparation apparatus based on the test information related to quality of smearing and/or staining of the cell image analysis apparatus in the second test result.
23. The sample analysis system of examples 18 to 22, wherein the hematology analyzer is further configured to test the sample to obtain the first test result of the sample, only after being subjected to and passing quality control.
24. The sample analysis system of example 18, wherein the controller is further configured to: if a deviation between the second test result and the first test result of the quality control sample is outside a preset range, control the display apparatus to output quality control prompt information of the cell image analysis apparatus.
25. An automated precision management method for a sample analysis system, characterized in that the method comprises the following steps:
   testing a sample by a hematology analyzer to obtain a first test result of the sample;
   an automated quality control start step: upon completion of testing N^{th} sample after the hematology analyzer initially starts testing in each cycle, or at a preset time after initially starting testing, controlling a dispatching apparatus to transfer the sample that has been tested by the hematology analyzer to a smearing machine;
   preparing a quality control blood smear from the sample by the smearing machine, wherein the quality control blood smear is provided with a quality control marker;
   staining the quality control blood smear by a staining machine;
   controlling, by a controller, the dispatching apparatus to transfer the quality control blood smear to a cell image analysis apparatus;
   identifying the quality control marker, switching to a quality control mode, and imaging and analyzing the quality control blood smear in the quality control mode to obtain a second test result, by the cell image analysis apparatus;
   comparing the first test result with the second test result of the quality control sample; and
   outputting a result of the comparison.
26. The method of example 25, further comprising:
   providing an automated quality control option on a display interface for selection by a user, and after an instruction for selecting the automated quality control option is received, performing the automated quality control start step.
27. A sample analysis system, characterized in that the sample analysis system comprises:
   a smear preparation apparatus comprising a smearing machine and a staining machine, wherein the smearing machine is configured to smear a quality control sample based on a preset smearing parameter, so as to smear a blood sample of the quality control sample, which is dispensed onto a slide, into a blood film, and the staining machine is configured to stain the blood film on the slide based on a preset staining parameter; and
   a cell image analysis apparatus configured to image and analyze the blood smear to obtain a second test result based on the imaging and analysis, wherein the second test result comprises test information related to smearing and staining of the quality control blood smear; and
   a controller configured to determine quality of smearing and staining of the quality control blood smear based on the second test result.
28. The system of example 27, further comprising:
   a hematology analyzer configured to test at least one sample; and
   wherein the controller is further configured to obtain a first test result of the at least one sample based on analysis of the hematology analyzer, determine in real time whether a preset condition is satisfied, and if the preset condition is satisfied, select a sample that has been analyzed by the hematology analyzer as the quality control sample; and the controller is further configured to control a dispatching apparatus to transfer the quality control sample to the smear preparation apparatus.
29. The sample analysis system of example 28, wherein the smear preparation apparatus further comprises a printing apparatus configured to print sample information on the blood smear of the quality control sample, wherein the sample information comprises a quality control marker.
30. The sample analysis system of example 28 or 29, wherein the controller is further configured to: identify blood film morphology and/or cell distribution of the quality control blood smear based on the test information related to smearing in the second test result; and determine smearing quality of the smearing machine based on the blood film morphology and/or cell distribution of the quality control blood smear;
   wherein the test information related to smearing in the second test result comprises at least one of blood film morphology and cell distribution of the quality control blood smear that are obtained by the cell image analysis apparatus.
31. The sample analysis system of any one of examples 28 to 30, wherein the controller is further configured to: identify at least one of blood film color and color shade of the quality control blood smear based on the test information related to staining in the second test result; and determine staining quality of the smear preparation apparatus based on at least one of the blood film color and the color shade of the quality control blood smear, wherein the test information related to staining in the second test result comprises at least one of blood film color and color shade of the quality control blood smear that are obtained by the cell image analysis apparatus.
32. The sample analysis system of any one of examples 28 to 31, wherein the controller is further configured to compare corresponding result information in the first test result of the quality control sample with that in the second test result of the quality control sample; and control a display apparatus to output a result of the comparison.
33. A sample analysis system, comprising:
   a memory configured to store a program; and
   a processor configured to execute the program stored in the memory to implement the method of any one of examples 1 to 17 and examples 25 and 26.
34. A computer-readable storage medium, comprising a program, wherein the program is capable of being executed by a processor to implement the method of any one of examples 1 to 17 and examples 25 and 26.

## Claims

1. A sample analysis system, **characterized in that** the sample analysis system comprises: a hematology analyzer (110), a controller (140), a smear preparation apparatus comprising a smearing machine (121) and a staining machine (122), and a cell image analysis apparatus (130); wherein:
the controller (140) configured to determine in real time whether a preset condition for triggering quality control is satisfied, and if the preset condition for triggering quality control is satisfied, select a sample that has been analyzed by the hematology analyzer (110) as a quality control sample; and the controller (140) is further configured to control a dispatching apparatus (150, 160) to transfer the quality control sample to the smear preparation apparatus (120);
the smearing machine is configured to smear the quality control sample based on a preset smearing parameter, so as to smear the quality control sample, which is dispensed onto a slide, into a blood film, and the staining machine is configured to stain the blood film on the slide based on a preset staining parameter, so as to prepare a quality control blood smear from the quality control sample;
the cell image analysis apparatus (130) is configured to image and analyze the quality control blood smear to obtain a second test result, wherein the second test result comprises test information related to smearing and/or staining; and
the controller is further configured to determine quality of smearing and/or staining based on the second test result.

2. The sample analysis system of claim 1, wherein the controller is further configured to determine that the smear preparation apparatus fails to pass quality control, if the test information related to smearing does not match the preset smearing parameter and/or the test information related to staining does not match the preset staining parameter.

3. The sample analysis system of claim 1 or 2, wherein the smear preparation apparatus (120) further comprises a printing apparatus (123) configured to print sample information on the quality control blood smear, wherein the sample information comprises a quality control marker.

4. The sample analysis system of any one of claims 1 to 3, wherein the controller is further configured to: identify morphology of the blood film and/or cell distribution of the quality control blood smear based on the test information related to smearing in the second test result; and determine smearing quality of the smearing machine based on the morphology of the blood film and/or the cell distribution of the quality control blood smear;
wherein the test information related to smearing in the second test result comprises at least one of morphology of the blood film and cell distribution of the quality control blood smear that are obtained by the cell image analysis apparatus.

5. The sample analysis system of any one of claims 1 to 4, wherein the controller is further configured to: identify at least one of color of the blood film and color shade of the quality control blood smear based on the test information related to staining in the second test result; and determine staining quality of the staining machine based on at least one of the color of the blood film and the color shade of the quality control blood smear;
wherein the test information related to staining in the second test result comprises at least one of color of the blood film and color shade of the quality control blood smear that are obtained by the cell image analysis apparatus.

6. The sample analysis system of any one of claims 1 to 5, wherein the controller (140) is further configured to obtain a first test result of the quality control sample that has been analyzed by the hematology analyzer (110), compare corresponding result information in the first test result of the quality control sample with that in the second test result of the quality control blood smear, and control a display apparatus to output a result of the comparison.

7. The sample analysis system of any one of claims 1 to 5, wherein: the controller (140) is further configured to obtain a first test result of the quality control sample that has been analyzed by the hematology analyzer (110), and, if it is determined that the quality of smearing and staining is qualified based on the second test result, the controller is further configured to:
compare a first test result value of a preset type of cells in the quality control sample in the first test result with a second test result value of the preset type of cells in the second test result, and automatically perform quality control on the hematology analyzer (110) or the cell image analysis apparatus (130) based on the result of the comparison;
wherein, if the first test result value is used as a baseline, then it can be determined through the comparison whether the second test result value is accurate, so as to perform quality control on the cell image analysis apparatus (130); and if the second test result value is used as a baseline, it can be determined through the comparison whether the first test result value is accurate, so as to perform quality control on the hematology analyzer (110).

8. An automated precision management method, **characterized in that** the method comprises automatically performing the following steps:
testing samples to be analyzed by a hematology analyzer (110), to obtain first test results of the samples to be analyzed, wherein the samples to be analyzed are blood samples of patients;
determining in real time whether a preset condition for triggering quality control is satisfied, and when the preset condition for triggering quality control is satisfied, selecting a quality control sample from the samples that have been tested, based on the first test results obtained by the hematology analyzer (110);
smearing the quality control sample, to prepare a quality control blood smear;
staining the quality control blood smear;
imaging and analyzing the stained quality control blood smear, to obtain a second test result.

9. The method of claim 8, further comprising: determining quality of smearing and/or staining, based on test information related to smearing and/or staining in the second test result;
preferably, it is determined that the smearing of the quality control sample fails to pass quality control, if the test information related to smearing does not match a preset smearing parameter for smearing the quality control sample, and/or it is determined that the staining of the quality control blood smear fails to pass quality control, if the test information related to staining does not match a preset staining parameter for staining the quality control blood smear.

10. The method of claim 9, wherein the test information related to smearing in the second test result comprises at least one of morphology of the blood film and cell distribution of the quality control blood smear that are obtained by imaging and analyzing the stained quality control blood smear;
wherein determining quality of smearing and/or staining, based on test information related to smearing and/or staining in the second test result, comprises: identifying morphology of the blood film and/or cell distribution of the quality control blood smear based on the test information related to smearing in the second test result; and determining the quality of the smearing of the quality control sample based on the morphology of the blood film and/or cell distribution of the quality control blood smear.

11. The method of claim 9 or 10, wherein the test information related to staining in the second test result comprises at least one of color of the blood film and color shade of the quality control blood smear that are obtained by imaging and analyzing the stained quality control blood smear;
wherein determining quality of smearing and/or staining, based on test information related to smearing and/or staining in the second test result, comprises: identifying at least one of color of the blood film and color shade of the quality control blood smear based on the test information related to staining in the second test result; and determining staining quality based on at least one of the color of the blood film and the color shade of the quality control blood smear.

12. The method of any one of claims 8-11, further comprising automatically performing the following steps:
comparing the first test result with the second test result of the quality control sample; and
performing quality control on the hematology analyzer (110) or a cell image analysis apparatus (130), which is configured to image and analyze the stained quality control blood smear, based on the result of the comparison, wherein, if the first test result is used as a baseline, then it can be determined through the comparison whether the second test result is accurate, so as to perform quality control on the cell image analysis apparatus (130); and if the second test result is used as a baseline, it can be determined through the comparison whether the first test result is accurate, so as to perform quality control on the hematology analyzer (110).

13. The method of claim 12, wherein comparing the first test result with the second test result of the quality control sample comprises:
comparing a first test result value of a preset type of cells in the quality control sample in the first test result with a second test result value of the preset type of cells in the second test result; and
wherein performing quality control on the hematology analyzer (110) or the cell image analysis apparatus (130) based on the result of the comparison comprises:
outputting prompt information if a deviation between the first test result value and the second test result value of the preset type of cells in the quality control sample is outside a preset range.

14. The method of claim 12 or 13, wherein comparing the first test result with the second test result of the quality control sample comprises:
comparing the first test result with the second test result of the quality control sample after the smearing quality and the staining quality are determined to be qualified.

15. The method of any one of claims 8-14, further comprising:
providing an automated quality control option on a display interface for selection by a user, and after an instruction for selecting the automated quality control option is received, performing the automated quality control start step.
